## Europäisches Patentamt
## European Patent Office
## Office européen des brevets

(19)

(11) Publication number:

# 0 089 758
# A2

(12)

# EUROPEAN PATENT APPLICATION

(21) Application number: 83301072.1

(22) Date of filing: 01.03.83

(51) Int. Cl.³: G 02 B 7/26

(30) Priority: 24.03.82 GB 8208675

(43) Date of publication of application:
28.09.83 Bulletin 83/39

(84) Designated Contracting States:
CH DE FR IT LI SE

(71) Applicant: PLESSEY OVERSEAS LIMITED
Vicarage Lane
Ilford Essex IGI 4AQ(GB)

(72) Inventor: McIntosh, Graham David
14 Sherman Road
Reading Berks(GB)

(74) Representative: Goodman, Christopher
The Plessey Company plc
Beeston Nottingham NG9 1LA(GB)

(54) Optical fibre attenuators.

(57) An attenuator which attenuates light emitted from a first optical fibre entering a second optical fibre by rotation of a rectangular glass block.

EP 0 089 758 A2

## OPTICAL FIBRE ATTENUATOR

This invention relates to optical attenuators and more particularly to an optical attenuation apparatus for attenuating the light from one optical fibre entering a second optical fibre.

It is therfore an object of the present invention to enable a reduction of the l i g h t within an optical fibre link to give an attenuation of from zero to a desired value or between two predetermined values.

According to the present invention there is provided an optical attenuator for attenuating light from a first optical fibre entering a second optical fibre including a rectangular glass block mounted between the first and second optical fibres, said glass block being rotatable between a first position in which there is substantially no loss of light between the first and second optical fibres and a second position in which there is a predetermined loss of light between said first and second optical fibres.

Further according to a preferred embodiment of the present invention said rectangular glass block comprises two identical right angle prisms fitted together with their major faces in contact and including means for rotating the rectangular glass block to produce a predetermined loss and means for sliding one identical right angle glass prism with respect to the other to procuce a fine tuning for said predetermined loss.

Embodiments of the present invention will now be described, by way of example with reference to the accompanying drawings, in which;-

Figure 1 shows a basic form of the present invention illustrating the principle components,

Figure 2 shows the arrangement of figure 1 with some attenuation of the light beam,

Figure 3 shows the light beam patterns of the arrangements of figures 1 or 2 and

Figure 4 illustrates a further embodiment of the present invention.

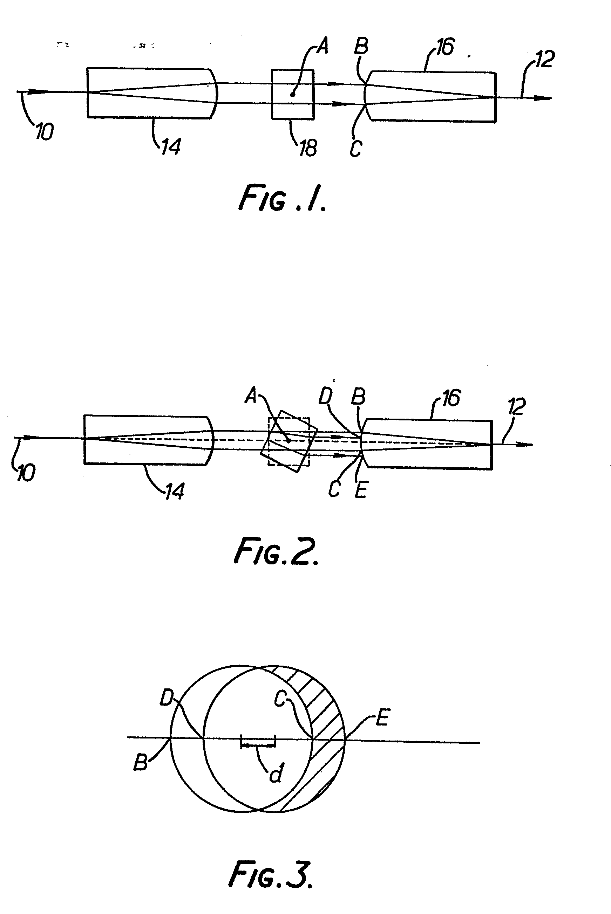

Referring now to figure 1 the basic form of the inventive apparatus is shown in schematic form. Input and output optical fibres 10, 12 are connected to respective cylindrical or rod lenses 14,16; light emitted from fibre 10 is collimated by lens 14 and the collimated beam passes through a glass block 18 and into the lens 16 which focusses the beam onto the output optical fibre 12.

In this state the device has no attenuation other than the losses due to jointing of the fibres to the lenses and reflection lenses.

Referring now to figure 2 if the rectangular block 18 is rotated as shown about A then the optical axis is deflected. The amount of displacement between the old optical axis and the new can be determined by Snells law and is merely a function of refraction.

The effect of this deviation of the optical axis is to shift the whole beam parallel to the original by an amount "d". In the normal position shown in figure 1 the lens 16 and output fibre 12 have an effective aperture defined by B and C. The rotation of block 15 causes the extreme rays to shift to the points D and E. The extreme ray D is still within the acceptance aperture B-C and is therefore focussed onto the fibre 12. The extreme ray E is not however within the acceptance aperture of the fibre and hence although the ray from C to E will still be focussed onto the output fibre 12 they will not be accepted because they impinge onto the fibre at angles higher than the numerical aperture of the fibre. All rays within D to C are accepted by the fibre 12 because they are within the numerical aperture of the fibre. The loss can be seen, as shown shaded in figure 3, as the output beam shears across the entrance pupil of lens 16.

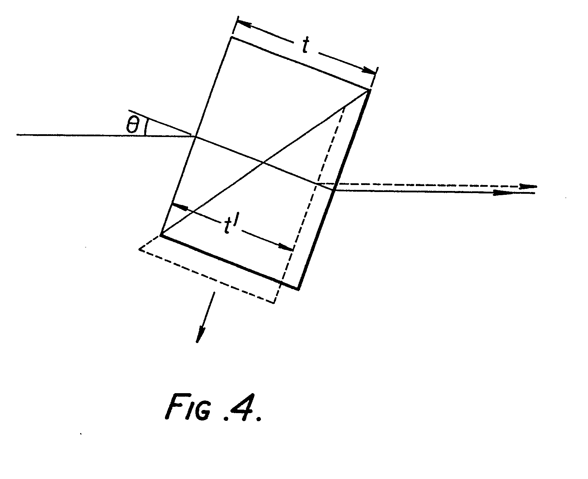

The deviation of the beam "d" is a function of the thickness of the block 18, its refracture index and the angle of rotation. Using this information it is possible to construct a device which can be made to vary about a fixed value by altering the thickness of the block. This can be achieved as shown in dotted lines in figure 4.

With reference to figure 4 the glass block 18 is now made of two identical right angle prisms 20,22 which are joined as shown. The desired original loss is set by rotating both prisms together through an angle 0. Variations can be made around this value by sliding one of the prisms 22 relative to the other 20, as shown by the dotted lines, along the hypotenuse. This changes the thickness of the block as shown from "$\underline{t}$" to "$\underline{t'}$" and hence changes the amount of shear. Thus using this method fine tuning is possible

Further losses apart from those theoretically predictable, will be present due to surface reflections and dispersion of the glass block. This latter effect can be desirable in that it affords a small amount of filtering.

What We Claim is:-

1. An optical attenuation for attenuating light from a first optical fibre entering a second optical fibre including a rectangular glass block mounted between the first and second optical fibres, said glass block being rotatable between a first position in which there is substantially no loss of light between the first and second optical fibres and a second position in which there is a predetermined loss of light between said first and second optical fibres.

2. An optical attenuator as claimed in claim 1 in which said rectangular glass block comprises two identical right angle prisms fitted together with their major faces in contact and including means for rotating the rectangular glass block to produce a predetermined loss and means for sliding one identical right angle glass prism with respect to the other to produce a fine tuning for said predetermined loss.

3. An optical attenuation substantially as described with reference to the accompanying drawings.

FIG .1.

FIG.2.

FIG.3.

FIG .4.